(19) Europäisches Patentamt
European Patent Office
Office européen des brevets

(11) **EP 4 411 691 A1**

(12) **EUROPEAN PATENT APPLICATION**
published in accordance with Art. 153(4) EPC

(43) Date of publication:
**07.08.2024 Bulletin 2024/32**

(21) Application number: **21958594.0**

(22) Date of filing: **29.09.2021**

(51) International Patent Classification (IPC):
**G08G 1/16** $^{(2006.01)}$

(52) Cooperative Patent Classification (CPC):
**G08G 1/16**

(86) International application number:
**PCT/IB2021/000673**

(87) International publication number:
**WO 2023/052801 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **NISSAN MOTOR CO., LTD.**
**Kanagawa 221-0023 (JP)**

• **Renault s.a.s**
**92100 Boulogne Billancourt (FR)**

(72) Inventors:
• **TAMURA, Sayuri**
**Atsugi-shi, Kanagawa 243-0123 (JP)**
• **GOTO, Akinobu**
**Atsugi-shi, Kanagawa 243-0123 (JP)**

(74) Representative: **Global IP Europe
Patentanwaltskanzlei
Pfarrstraße 14
80538 München (DE)**

(54) **DRIVING CONTROL METHOD AND DRIVING CONTROL DEVICE**

(57) A processor 10 of a driving control device 100 determines whether or not an intersection T exists downstream of a host vehicle 1. When the intersection T exists, the processor 10 sets a deceleration rate switching position Pk that is a predetermined switching determination distance Xa upstream from a predetermined object in the intersection T, acquires a stop position Ps that is upstream of the intersection T and downstream of the deceleration rate switching position Pk, and generates a vehicle speed profile such that the host vehicle 1 will decelerate at a primary deceleration rate Acoast between the deceleration start position P0 and the deceleration rate switching position Pk, decelerate at a secondary deceleration rate Ath that is higher than the primary deceleration rate Acoast between the deceleration rate switching position Pk and the stop position Ps, and stop at the stop position Ps when the state of the object satisfies a stop condition.

**FIG. 1**

## Description

**Technical Field**

The present invention relates to a driving control method and a driving control device.

**Background Technology**

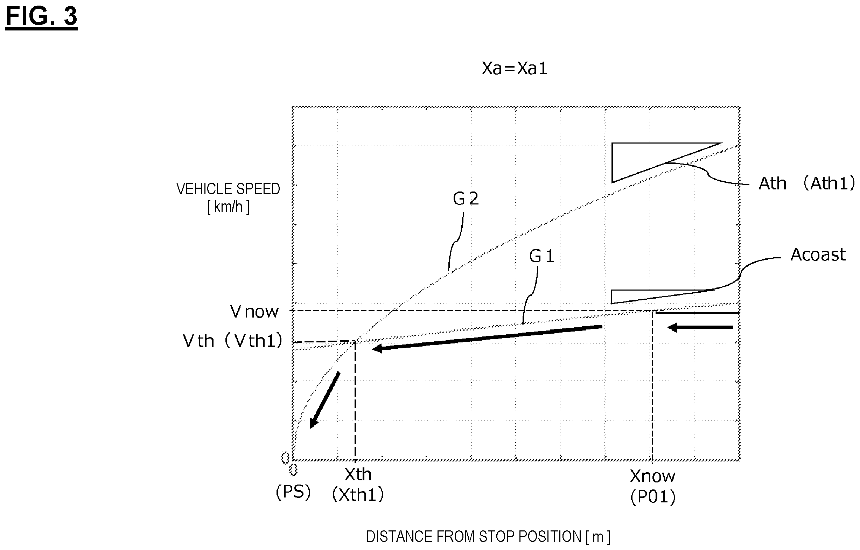

In a driving control method described in Patent Citation 1, in cases in which a traffic light is detected downstream of a host vehicle, the host vehicle first decelerates at a predetermined deceleration rate, and then when the signal color of the traffic light cannot be identified or the traffic light is displaying a stop signal at a moment in time when the host vehicle reaches a limit position where the vehicle can stop, the vehicle decelerates at a greater deceleration rate and stops before the traffic light (see Fig. 3 of Patent Citation 1).

**Prior Art Documents**

**Patent Citations**

Patent Citation 1: Japanese Laid-open Patent Application No. 2018-173723

**Summary of the Invention**

**Problems to be Solved by the Invention**

However, in the driving control method described in Patent Citation 1, the "limit position where the host vehicle can stop," which is the position at which the deceleration rate is changed, is set according to a stop position where the host vehicle stops; therefore, if the stop position is farther upstream of the traffic light, which is an object, the moment in time at which the deceleration rate is changed will be commensurately earlier, potentially disturbing the flow of following traffic.

A problem to be solved by the present invention is to provide a driving control method and a driving control device with which the deceleration rate can be changed while reducing the possibility of the flow of following traffic being disturbed when the host vehicle stops at a stop position upstream of an intersection.

**Means For Solving the Problems**

In the present invention, the problem described above is solved by generating a vehicle speed profile such that a deceleration rate switching position, which is a predetermined switching determination distance from a predetermined object at an intersection, is set, and where the state of the object satisfies a predetermined stop condition, a host vehicle will decelerate at a primary deceleration rate between a deceleration start position and a deceleration rate switching position, and decelerate at a secondary deceleration rate higher than the primary deceleration rate between the deceleration rate switching position and a stop position so that the host vehicle will stop at the stop position.

**Effect of the Invention**

The present invention exhibits the following effect: because a deceleration rate switching position, at which a predetermined switching determination distance is assessed from a predetermined object at an intersection, is set in advance, it is possible, when the host vehicle is to stop at a stop position upstream of the intersection, to switch between deceleration rates while reducing the possibility of disturbing the flow of following traffic.

**Brief Description of the Drawings**

Figure 1 is a block diagram of a configuration of a driving control device according to the present embodiment;
Figure 2 is a diagram of a positional relationship between a host vehicle of which driving is controlled by the driving control device shown in Fig. 1 and a traffic light that is an object in an intersection;
Figure 3 is a graph of an example of a primary deceleration profile and a secondary deceleration profile generated by the driving control device shown in Fig. 1;

Figure 4 is a graph of another example of a primary deceleration profile and a secondary deceleration profile generated by the driving control device shown in Fig. 1;

Figure 5 is an example of a graph of an imaginary deceleration profile and a secondary deceleration profile generated by the driving control device shown in Fig. 1;

Figure 6 is a flowchart of the procedure of the driving control method executed by the driving control device shown in Fig. 1;

Figure 7 is a diagram of a positional relationship between a host vehicle of which driving is controlled by the driving control device shown in Fig. 1 and a crosswalk that is an object in an intersection;

Figure 8 is a diagram of another example of a positional relationship between a host vehicle of which driving is controlled by the driving control device shown in Fig. 1 and a traffic light that is an object in an intersection; and

Figure 9 is a graph of an example of a plurality of primary deceleration profiles and secondary deceleration profiles generated by the driving control device shown in Fig. 1 in the example shown in Fig. 8.

**Modes for Carrying Out the Invention**

An embodiment of the present invention shall be described below based on the drawings.

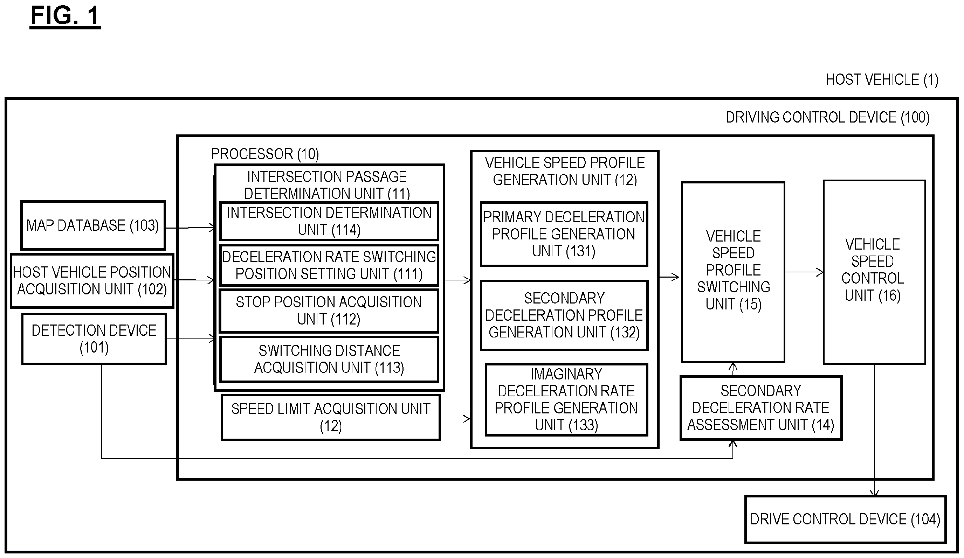

Figure 1 is a block diagram of a configuration of a host vehicle 1 and a driving control device 100 that controls autonomous driving of the host vehicle 1. The host vehicle 1 is provided with the driving control device 100, a detection device 101, a host vehicle position acquisition unit 102, a map database 103, and a drive control device 104.

The detection device 101 has either or both an onboard camera that captures images of the surroundings of the host vehicle and a radar (LIDAR) that detects moving objects and obstacles around the host vehicle. Detection results from the detection device 101 are outputted to the driving control device 100 at predetermined time intervals. Objects detected by the detection device 101 are, for example, traffic lights or crosswalks. When the object is a traffic light, the detection device 101 detects a signal (color) emitted by the traffic light. When the object is a crosswalk, the detection device 101 detects the presence or absence of moving objects such as pedestrians, bicycles (two-wheeled vehicles), wheelchairs, etc., at the crosswalk.

The host vehicle position acquisition unit 102 is constituted of a GPS unit, a gyro sensor, a vehicle speed sensor, etc. The host vehicle position acquisition unit 102 detects, via the GPS unit, radio waves transmitted from a plurality of satellite communications and periodically acquires position information for the host vehicle 1, and based on the acquired position information for the host vehicle 1, angle change information acquired from the gyro sensor, and vehicle speed acquired from the vehicle speed sensor, the host vehicle position acquisition unit 102 detects the current position of the host vehicle 1. The position information for the host vehicle 1 detected by the host vehicle position acquisition unit 102 is outputted to the driving control device 100 at predetermined time intervals.

The map database 103 is a memory configured so as to store three-dimensional high-precision map information including position information for various facilities and specific points, and to be accessible from the driving control device 100. High-precision digital map information (high-precision map, dynamic map) is stored in the map database 103. The high-precision map information includes the positions of intersections. The high-precision map information also includes the positions of stop lines where the host vehicle should stop according to predetermined conditions.

The drive control device 104 controls the driving of the host vehicle 1 based on control commands from the driving control device 100. For example, the drive control device 104, via an autonomous speed control function, controls the actions of a drive mechanism for adjusting acceleration rate and vehicle speed (including the actions of an internal combustion engine in an engine automobile, the actions of a travel motor in an electric automobile system, and torque distribution between an internal combustion engine and a travel motor in a hybrid automobile), and braking actions.

Next, the configuration of the driving control device 100 shall be described in detail using Figs. 1 to 6.

As shown in Fig. 1, the driving control device 100 is provided with a processor 10. The processor 10 is constituted of read-only memory (ROM) that stores programs for controlling the driving of the host vehicle, a central processing unit (CPU) that executes the programs stored in the ROM, and random access memory (RAM) that functions as an accessible storage device. Instead of or in addition to the central processing unit (CPU), operating circuits can include a micro processing unit (MPU), a digital signal processor (DSP), an application-specific integrated circuit (ASIC), a field programmable gate array (FPGA), etc. The processor 10 is provided with an intersection passage determination unit 11, a speed limit acquisition unit 12, a vehicle speed profile generation unit 13, a secondary deceleration rate assessment unit 14, a vehicle speed profile switching unit 15, and a vehicle speed control unit 16. The intersection passage determination unit 11, the speed limit acquisition unit 12, the vehicle speed profile generation unit 13, the secondary deceleration rate assessment unit 14, the vehicle speed profile switching unit 15, and the vehicle speed control unit 16 execute programs for realizing the functions of the processor 10. In Fig. 1, the driving control device 100 is installed in the host vehicle 1 but is not limited as such; the driving control device 100 may be a device that operates the host vehicle 1 remotely.

The intersection passage determination unit 11 has an intersection determination unit 114, a deceleration rate switching position setting unit 111, a stop position acquisition unit 112, and a switching distance acquisition unit 113.

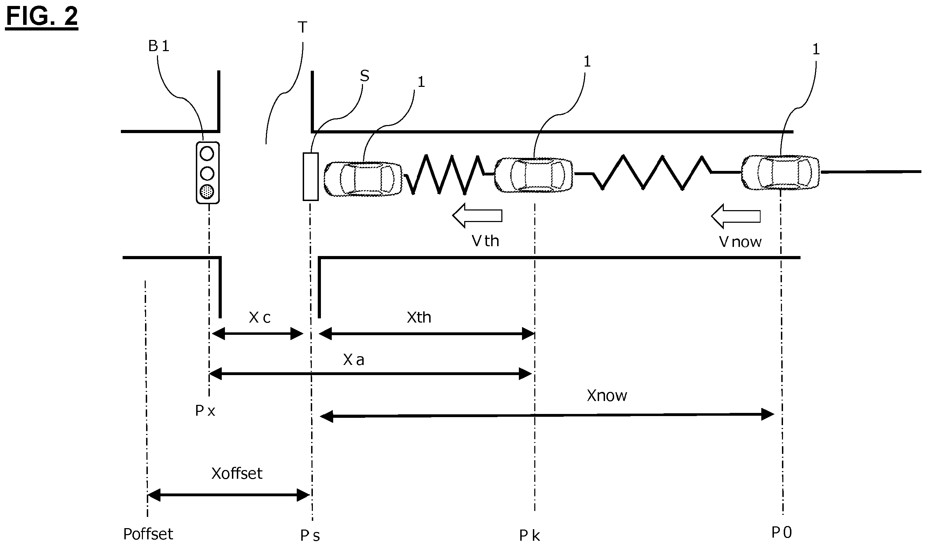

Based on information from the map database 103, position information for the host vehicle 1 acquired by the host vehicle position acquisition unit, and a detection result from the detection device 101, the intersection determination unit 114 determines whether or not there is an intersection downstream (ahead) of the host vehicle 1. In addition, the deceleration rate switching position setting unit 111 sets a deceleration rate switching position Pk, which is a predetermined switching determination distance Xa upstream from a traffic light B1, which is a predetermined object in an intersection T, as shown in Fig. 2. The predetermined switching determination distance Xa is a distance at which the detection device 101 of the host vehicle 1 is able to recognize the traffic light B1, which is an object. The stop position acquisition unit 112 acquires a stop position Ps, which is a position at which the host vehicle 1 should stop when the state of the object (the traffic light B 1) satisfies a predetermined stop condition. The stop position Ps is upstream of the intersection T and downstream of the deceleration rate switching position Pk. The stop position Ps is the position of a stop line S displayed on a road surface, but not by way of limitation; the stop position Ps may be the position of an imaginary stop line set by the stop position acquisition unit 112. The stop line S does not include a temporary stop line, which is a stop line at which the host vehicle 1 should stop regardless of whether or not the stop condition is satisfied. The phrase "when the state of the object satisfies a predetermined stop condition" means, in a case in which the object is the traffic light B1, either, for example, when the traffic light B1 is displaying a stop signal (when the signal color of the traffic light B1 is red), or that the detection device 101 cannot detect the signal color of the traffic light B1. The stop signal displayed by the traffic light B1 may also include the signal color of the traffic light B1 being yellow. Factors causing the detection device 101 to be unable to detect the signal color of the traffic light B1 are, for example, weather such as a snowstorm, failure of the traffic light B1, road shapes such as a curve, when a preceding vehicle is a large vehicle such as a truck, etc. In addition, the switching distance acquisition unit 113 acquires a switching distance Xth between the deceleration rate switching position Pk and the stop position Ps.

The speed limit acquisition unit 12 acquires a speed limit from image information for a speed limit sign detected by the detection device 101, or speed limit information included in navigation data or map data. The speed limit is set as an initial vehicle speed Vnow in a deceleration start position P0.

The vehicle speed profile generation unit 13 generates a vehicle speed profile so that the host vehicle 1 stops as the stop position Ps when the state of the object satisfies a predetermined stop condition. The vehicle speed profile generation unit 13 has a primary deceleration profile generation unit 131, a secondary deceleration profile generation unit 132, and an imaginary deceleration profile generation unit 133. A primary deceleration profile generated by the primary deceleration profile generation unit 131 and a secondary deceleration profile generated by the secondary deceleration profile generation unit 132 each have an initial vehicle speed Vnow for the host vehicle 1 in the deceleration start position P0, an initial distance Xnow between the deceleration start position P0 and the stop position Ps, a switching vehicle speed Vth of the host vehicle 1 in the deceleration rate switching position Pk, and a switching distance Xth between the deceleration rate switching position Pk and the stop position Ps.

The primary deceleration profile generation unit 131 generates a primary deceleration profile G1 so that the host vehicle 1 decelerates at a predetermined primary deceleration rate Acoast between the deceleration start position P0 and the deceleration rate switching position Pk, as shown in the graph of Fig. 3. The primary deceleration rate Acoast is a deceleration rate (e.g., 0.04 G) that does not cause the brake lights of the host vehicle 1 to light up. The primary deceleration rate Acoast is calculated according to the following formula (1) based on the initial vehicle speed Vnow at the deceleration start position P0 and the initial distance Xnow between the deceleration start position P0 and the stop position Ps, such that the vehicle speed of the host vehicle 1 will reach a predetermined switching vehicle speed Vth at the deceleration rate switching position Pk.

[Formula 1]

$$A_{coast} = \frac{V_{now}^2 - V_{th}^2}{2*(X_{now}-X_{th})}$$

In the primary deceleration profile generated by the primary deceleration profile generation unit 131, an imaginary position Poffset at which the vehicle speed of the host vehicle 1 will reach 0 is set as shown in Fig. 2. The vehicle speed V of the host vehicle 1 in the primary deceleration profile is calculated according to the following formula (2) based on the primary deceleration rate Acoast and an imaginary distance Xoffset between the stop position Ps and the imaginary position Poffset. In the example in Fig. 2, the imaginary distance Xoffset is a negative value because the imaginary position Poffset is downstream of the stop position Ps.

[Formula 2]

$$V = \sqrt{2 * A_{coast} * (X - X_{offset})}$$

The secondary deceleration profile generation unit 132 generates a secondary deceleration profile G2 so that the host vehicle 1 decelerates at a predetermined secondary deceleration rate Ath between the deceleration rate switching position Pk and the stop position Ps, as shown in the graph of Fig. 3. In the secondary deceleration profile, the vehicle speed V of the host vehicle 1 is calculated according to the following formula (3) based on the switching vehicle speed Vth, so that the host vehicle 1 will stop at the stop position Ps. The secondary deceleration profile generation unit 132 sets the secondary deceleration rate Ath so as to be higher than the primary deceleration rate Acoast. The secondary deceleration rate Ath is a deceleration rate (e.g., 0.25 G) that does not impair the riding comfort of occupants of the host vehicle 1.

[Formula 3]

$$V = \sqrt{2 * A_{th} * X}$$

The vehicle speed profile generation unit 13 generates a vehicle speed profile so that the host vehicle 1 travels at the initial vehicle speed Vnow until the deceleration start position P0 and decelerates at the primary deceleration rate Acoast between the deceleration start position P0 and the stop position Ps, as shown by the arrows in Fig. 3. In addition, the vehicle speed profile generation unit 13 generates a vehicle speed profile so that the host vehicle 1 decelerates at a secondary deceleration rate Ath higher than the primary deceleration rate Acoast between the deceleration rate switching position Pk and the stop position Ps, and the host vehicle 1 stops at the stop position Ps when the object satisfies a stop condition. That is, the vehicle speed profile generation unit 13 generates a vehicle speed profile so that when the state of the object satisfies a stop condition at the moment in time when the host vehicle 1 passes through the deceleration rate switching position Pk, the host vehicle 1, which had been decelerating at the primary deceleration rate Acoast between the deceleration start position P0 and the deceleration rate switching position Pk, will decelerate at the secondary deceleration rate Ath and stop at the stop position Ps after passing through the deceleration rate switching position Pk.

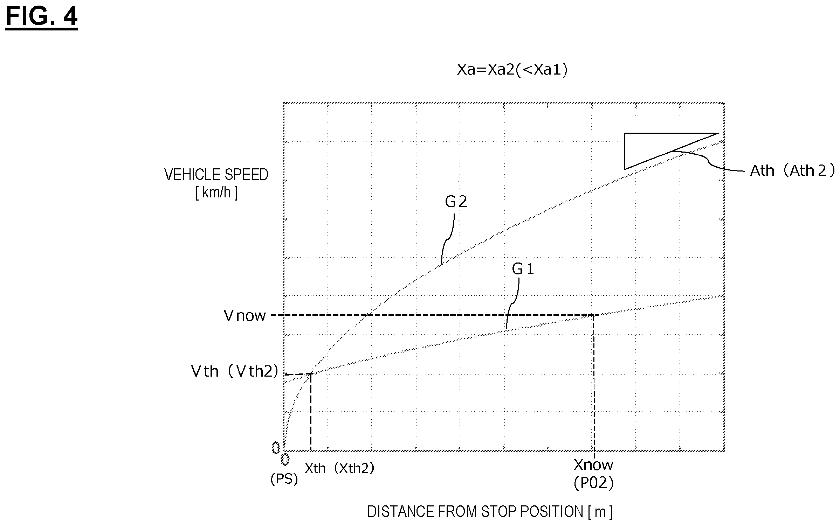

As shown in Figs. 3 and 4, the secondary deceleration profile generation unit 132 sets the secondary deceleration rate Ath based on the switching distance Xth between the deceleration rate switching position Pk and the stop position Ps. That is, the secondary deceleration rate Ath is set so that a secondary deceleration rate Ath2, which corresponds to a second switching distance Xth2 that is shorter than a first switching distance Xth1 shown in Fig. 4, will be higher than a secondary deceleration rate Ath1, which corresponds to a first switching distance Xth1 shown in Fig. 3. That is, the secondary deceleration profile generation unit 132 sets the secondary deceleration rate Ath so as to increase commensurately with a decrease in the switching distance Xth. The secondary deceleration profile generation unit 132 sets the secondary deceleration rate Ath using a predetermined secondary deceleration rate upper limit value Alim as an upper limit. When the secondary deceleration profile generation unit 132 sets the secondary deceleration rate upper limit value Alim as the secondary deceleration rate Ath, the vehicle speed profile generation unit 13 adjusts the switching vehicle speed Vth in accordance with the secondary deceleration rate upper limit value Alim. In addition, the primary deceleration profile generation unit 131 generates a primary deceleration profile in accordance with the secondary deceleration rate upper limit value Alim and the switching vehicle speed Vth. The secondary deceleration rate upper limit value Alim is an upper limit value of a deceleration rate that does not impair the riding comfort of the occupants of the host vehicle 1 and does not have an undue effect on other following vehicles (the deceleration of the host vehicle 1 is not rapid).

As shown in Figs. 3 and 4, the vehicle speed profile generation unit 13 sets the switching vehicle speed Vth based on the switching distance Xth between the deceleration rate switching position Pk and the stop position Ps. That is, the switching vehicle speed Vth is set so that a switching vehicle speed Vth2, which corresponds to a second switching distance Xth2 that is shorter than the first switching distance Xth1 shown in Fig. 4, will be lower than a switching vehicle speed Vth1, which corresponds to the first switching distance Xth1 shown in Fig. 3. That is, the vehicle speed profile generation unit 13 sets the switching distance Xth so as to decrease commensurately with a decrease in the switching distance Xth. The vehicle speed profile generation unit 13 sets the switching vehicle speed Vth using a predetermined vehicle speed upper limit value Vlim as an upper limit. When the vehicle speed profile generation unit 13 sets the vehicle speed upper limit value Vlim as the switching vehicle speed Vth, the primary deceleration profile generation unit 131 and the secondary deceleration profile generation unit 132 generate a primary deceleration profile and a secondary deceleration profile in accordance with the vehicle speed upper limit value Vlim. The vehicle speed upper limit value Vlim is set to a value that is lower than the speed limit (the initial vehicle speed Vnow).

The vehicle speed profile generation unit 13 sets the deceleration start position P0 based on the switching determination distance Xa, as shown in Figs. 3 and 4. In the example of Fig. 3, the switching determination distance Xa is a first switching determination distance Xa1, and in the example of Fig. 4, the switching determination distance Xa is a second switching determination distance Xa2 shorter than the first switching determination distance Xa1. In both of the examples of Figs. 3 and 4, the stop position Ps is the same position. The deceleration start position P0 is set such that a deceleration start position P02 corresponding to the second switching determination distance Xa2 shown in Fig. 4 is positioned farther downstream than a deceleration start position P01 corresponding to the first switching determination distance Xa1 shown in Fig. 3. That is, the deceleration start position P0 is set so as to be positioned commensurately farther downstream with a decrease in the switching determination distance Xa.

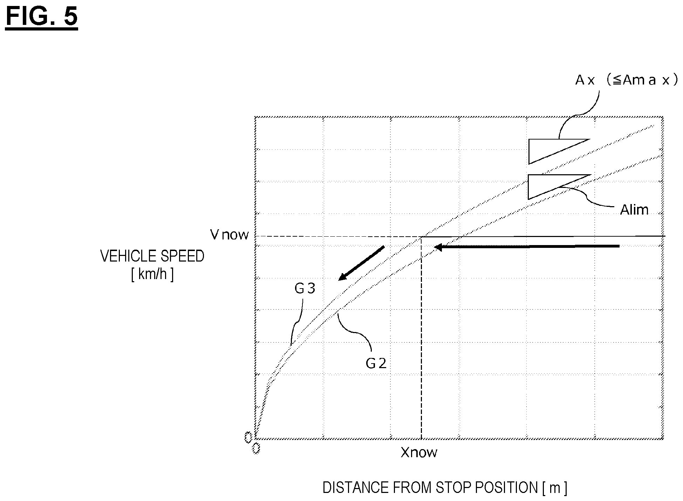

The imaginary deceleration rate profile generation unit 133 of the vehicle speed profile generation unit 13 shown in Fig. 1 calculates an imaginary deceleration rate Ax for a case assuming that the host vehicle 1 decelerates at a constant imaginary deceleration rate Ax between the deceleration start position P0 and the stop position Ps and stops at the stop position Ps, as shown in Fig. 5. The vehicle speed profile generation unit 13 generates an imaginary deceleration profile G3 based on the imaginary deceleration rate Ax. When the imaginary deceleration rate Ax is higher than the secondary deceleration rate upper limit value Alim, the vehicle speed profile generation unit 13 generates a vehicle speed profile again such that the host vehicle 1 decelerates at the imaginary deceleration rate Ax between the deceleration start position P0 and the stop position Ps, as shown by the arrows in Fig. 5. That is, when the moment in time that the intersection passage determination unit 11 determines will be the moment the host vehicle 1 will pass through the intersection T is later than a predetermined moment referencing a deceleration rate switching moment at which the host vehicle 1 will pass through the deceleration rate switching position Pk, the imaginary deceleration rate Ax will be higher than the secondary deceleration rate upper limit value Alim. In this case, the vehicle speed profile generation unit 13 selects the imaginary deceleration profile G3 as the vehicle speed profile.

Based on the detection result from the detection device 101, the secondary deceleration rate assessment unit 14 shown in Fig. 1 assesses whether or not the deceleration rate of the host vehicle 1 will be switched from the primary deceleration rate Acoast to the secondary deceleration rate Ath at the deceleration rate switching position Pk. Specifically, the secondary deceleration rate assessment unit 14 determines whether or not the state of the object satisfies the stop condition at the moment in time when the host vehicle 1 passes through the deceleration rate switching position Pk, and when the state of the object satisfies the stop condition (e.g., when the traffic light B 1 displays a stop signal or when the detection device 101 cannot detect the signal color of the traffic light B 1), the secondary deceleration rate assessment unit 14 assesses that the deceleration rate of the host vehicle 1 will be switched from the primary deceleration rate Acoast to the secondary deceleration rate Ath.

When the secondary deceleration rate assessment unit 14 has assessed that the deceleration rate of the host vehicle 1 will be switched from the primary deceleration rate Acoast to the secondary deceleration rate Ath, the vehicle speed profile switching unit 15 switches the vehicle speed profile for after the host vehicle 1 has passed through the deceleration rate switching position Pk from the primary deceleration profile G1 to the secondary deceleration profile G2. When the secondary deceleration rate assessment unit 14 has assessed that the deceleration rate of the host vehicle 1 will not be switched from the primary deceleration rate Acoast to the secondary deceleration rate Ath, the vehicle speed profile switching unit 15, after the host vehicle 1 passes through the deceleration rate switching position Pk, does not switch the vehicle speed profile from the primary deceleration profile G1 to the secondary deceleration profile G2, but cancels executing driving control according to the vehicle speed profile. That is, when the state of the object does not satisfy the stop condition, the vehicle speed V of the host vehicle 1 returns to the initial vehicle speed Vnow and the host vehicle 1 passes through the intersection T at the initial vehicle speed Vnow. When the secondary deceleration rate assessment unit 14 has assessed that the deceleration rate of the host vehicle 1 will not be switched from the primary deceleration rate Acoast to the secondary deceleration rate Ath, the host vehicle 1 may pass through the intersection T with the vehicle speed V maintained at the switching vehicle speed Vth. As shown in Fig. 5, when the imaginary deceleration rate Ax is higher than the secondary deceleration rate upper limit value Alim and the degree to which the stop condition is satisfied is greater than a predetermined value, the vehicle speed profile switching unit 15 switches the vehicle speed profile so that the host vehicle 1 decelerates at the imaginary deceleration rate Ax or a maximum deceleration rate Amax.

When the imaginary deceleration rate is higher than the predetermined maximum deceleration rate Amax and the degree to which the stop condition is satisfied is the predetermined value or lower (e.g., when the signal color of the traffic light B 1 is yellow or green), as shown in Fig. 5, the vehicle speed profile switching unit 15 cancels executing driving control according to the vehicle speed profile (the imaginary deceleration profile G3) set by the vehicle speed profile generation unit 13. That is, when the imaginary deceleration rate is higher than the predetermined maximum deceleration rate Amax and degree to which the stop condition is satisfied is the predetermined value or lower, the host vehicle 1, without decelerating, passes through the stop position Ps at the initial vehicle speed Vnow. The vehicle speed profile switching unit 15 does not cancel execution of driving control according to the vehicle speed profile when the degree to which the stop condition is satisfied is greater than the predetermined value (e.g., when the signal color of the traffic light B1 is red or when a moving object such as a pedestrian is passing through the crosswalk of the intersection T), even if the imaginary deceleration rate Ax is higher than the predetermined maximum deceleration rate Amax. That is, when the imaginary deceleration rate Ax is higher than the predetermined maximum deceleration rate Amax and the degree to which the stop condition is satisfied is greater than the predetermined value, the host vehicle 1 decelerates at the maximum deceleration rate Amax and stops downstream of the stop position Ps. The maximum deceleration rate Amax is an upper limit value of the deceleration rate that can be realized by the host vehicle 1.

Based on the vehicle speed profile generated by the vehicle speed profile generation unit 13 and the result of the vehicle speed profile being switched by the vehicle speed profile switching unit 15, the vehicle speed control unit 16 outputs a command for controlling the vehicle speed of the host vehicle 1 to the drive control device 104. When the host vehicle 1 is traveling upstream of the deceleration start position P0, the vehicle speed control unit 16 determines whether or not the state of the object can be determined, and when the state of the object cannot be determined, the vehicle speed control unit 16 starts to execute driving control according to the vehicle speed profile at the deceleration start position P0. Specifically, when the detection device 101 cannot detect the signal color of the traffic light B1 while the host vehicle 1 is traveling upstream of the deceleration start position P0, the host vehicle 1 starts to decelerate at the deceleration start position P0 in accordance with the vehicle speed profile generated by the vehicle speed profile generation unit 13.

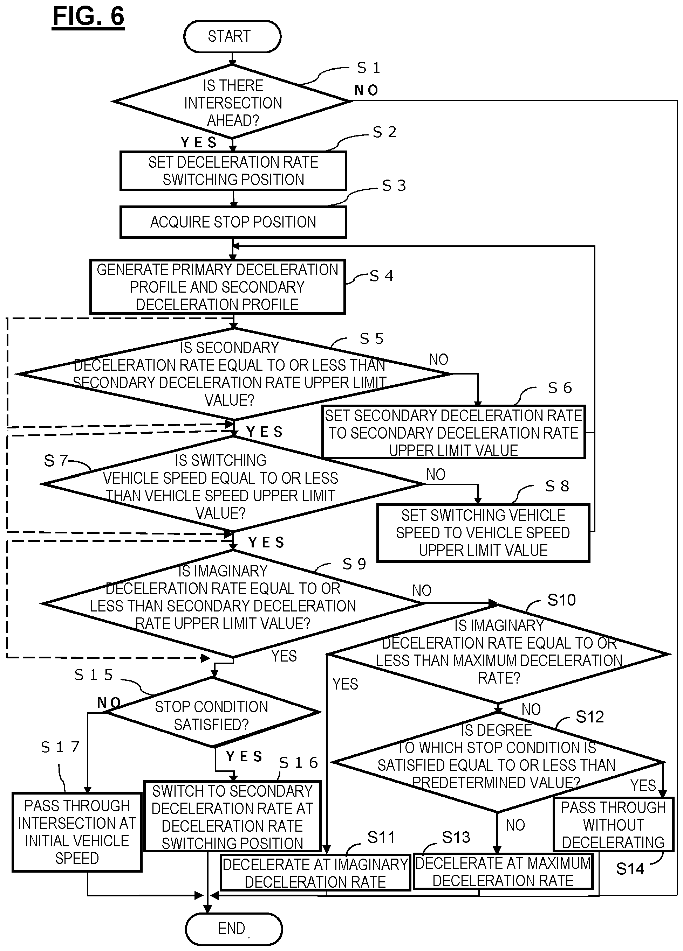

The procedure of the driving control method executed by the driving control device 100 shall next be described using Fig. 6.

First, in step S1 of Fig. 6, the intersection determination unit 114 of the intersection passage determination unit 11 determines whether or not an intersection T exists downstream (ahead) of the host vehicle 1. When the intersection determination unit 114 has determined that there is no intersection T downstream of the host vehicle 1, the processor 10 ends the process.

When the processor 10 has determined that there is an intersection T downstream of the host vehicle 1, in step S2, the deceleration rate switching position setting unit 111 sets a deceleration rate switching position Pk. Next, in step S3, the stop position acquisition unit 112 acquires a stop position Ps.

Next, in step S4, the primary deceleration profile generation unit 131 and the secondary deceleration profile generation unit 132 generate a primary deceleration profile G1 and a secondary deceleration profile G2, respectively based on the switching determination distance Xa, the initial distance Xnow, and the initial vehicle speed Vnow.

Next, in step S5, the vehicle speed profile generation unit 13 determines whether or not the secondary deceleration rate Ath generated by the secondary deceleration profile generation unit 132 is equal to or less than the secondary deceleration rate upper limit value Alim. When the secondary deceleration rate Ath is higher than the secondary deceleration rate upper limit value Alim, the vehicle speed profile generation unit 13 sets the secondary deceleration rate Ath again to the secondary deceleration rate upper limit value Alim in step S6, and once more generates a primary deceleration profile and a secondary deceleration profile in step S4.

In step S5, when it has been determined that the secondary deceleration rate Ath is equal to or less than the secondary deceleration rate upper limit value Alim, the vehicle speed profile generation unit 13 determines in step S7 whether or not the switching vehicle speed Vth at the deceleration rate switching position Pk is equal to or less than the vehicle speed upper limit value Vlim. When the switching vehicle speed Vth is higher than the vehicle speed upper limit value Vlim, the vehicle speed profile generation unit 13 sets the switching vehicle speed Vth again to the vehicle speed upper limit value Vlim in step S8, and once more generates a primary deceleration profile and a secondary deceleration profile in step S4.

Next, when it has been determined in step S7 that the switching vehicle speed Vth is equal to or less than the vehicle speed upper limit value Vlim, the vehicle speed profile generation unit 13 determines in step S9 whether or not the imaginary deceleration rate Ax generated by the imaginary deceleration rate profile generation unit 133 is equal to or less than the secondary deceleration rate upper limit value Alim.

When it has been determined in step S9 that the imaginary deceleration rate Ax is higher than the secondary deceleration rate upper limit value Alim, in step S10, the vehicle speed profile generation unit 13 determines whether or not the imaginary deceleration rate Ax is equal to or less than the maximum deceleration rate Amax. When the imaginary deceleration rate Ax is equal to or less than the maximum deceleration rate Amax, in step S11, the vehicle speed profile generation unit 13 generates a vehicle speed profile again such that the host vehicle 1 will decelerate at the imaginary deceleration rate Ax between the deceleration start position P0 and the stop position Ps.

When it has been determined in step S10 that the imaginary deceleration rate Ax generated by the imaginary deceleration rate profile generation unit 133 is higher than the maximum deceleration rate Amax, in step S12, the processor 10 determines whether or not the degree to which the state of the object satisfies the stop condition is equal to or less than a predetermined value. Specifically, when the object is a traffic light B 1, in step S12, the processor 10 determines that the degree to which the state of the object satisfies the stop condition is equal to or less than the predetermined value when the signal color of the traffic light B 1 is yellow or green. When it has been determined in step S12 that the degree to which the stop condition is satisfied is higher than the predetermined value, in step S13, the vehicle speed profile generation unit 13 generates a vehicle speed profile again such that the host vehicle 1 will decelerate at the maximum deceleration rate Amax between the deceleration start position P0 and the stop position Ps. When it has been determined in step S12 that the degree to which the state of the object satisfies the stop condition is equal to or less than the predetermined value, in step S14, the vehicle speed profile switching unit 15 cancels operation control according to the vehicle speed profile so that the host vehicle 1 will not decelerate and will pass through the stop position Ps at the initial vehicle speed Vnow.

Next, when it has been determined in step S9 that the imaginary deceleration rate Ax is higher than the secondary deceleration rate upper limit value Alim, in step S15, the vehicle speed profile generation unit 13 determines whether or not the state of the object satisfies the stop condition. The phrase "when the state of the object satisfies the stop condition" means, for example, when the traffic light B1 is displaying a stop signal or when the detection device 101 of the host vehicle 1 is unable to detect the signal displayed by the traffic light B 1. The phrase "when the state of the object does not satisfy the stop condition" means, for example, when the detection device 101 of the host vehicle 1 has detected that the signal color of the traffic light B 1 is green.

When it has been determined in step S15 that the state of the object satisfies the stop condition, the vehicle speed profile switching unit 15 switches the deceleration rate of the host vehicle 1 from the primary deceleration rate Acoast to the secondary deceleration rate Ath at the deceleration rate switching position Pk. When it has been determined in step S15 that the state of the object does not satisfy the stop condition, in step S17, the vehicle speed profile switching unit 15 cancels executing driving control according to the vehicle speed profile, so that the host vehicle 1 will pass through the intersection T at the initial vehicle speed Vnow.

As shown by the dashed lines in Fig. 6, the driving control device 100 may omit the process of steps S5 and S6, the process of steps S7 and S6, and the process of steps S9 to S14. The driving control device 100 may omit all the processes of steps S5 to S14, and after the vehicle speed profile generation unit 13 has generated a primary deceleration profile G1 in step S4, the driving control device 100 may determine in step S15 whether or not the state of the object satisfies the stop condition.

As described above, the processor 10 of the driving control device 100 according to the present embodiment sets a deceleration rate switching position Pk, which is a predetermined switching determination distance Xa upstream from a predetermined object (traffic light B 1) in an intersection T. The processor 10 acquires a stop position Ps that is upstream of the intersection T and downstream of the deceleration rate switching position. The vehicle speed profile generation unit 13 of the processor 10 then generates a vehicle speed profile such that the host vehicle 1 will decelerate at a primary deceleration rate Acoast between a predetermined deceleration start position P0 and the deceleration rate switching position Pk, decelerate at a secondary deceleration rate Ath higher than the primary deceleration rate Acoast between the deceleration rate switching position Pk and the stop position Ps, and stop at the stop position Ps when the state of the object satisfied a predetermined stop condition. The driving control device 100 thereby sets, in advance, a deceleration rate switching position Pk that is a predetermined switching determination distance Xa from a predetermined object, and an unnecessary secondary deceleration rate is therefore not generated when the host vehicle 1 stops at the stop position Ps. Therefore, the driving control device 100 can switch the deceleration rate from the primary deceleration rate Acoast to the secondary deceleration rate Ath while reducing the possibility of disturbing the flow of following traffic. In addition, by switching the deceleration rate of the host vehicle 1 from the primary deceleration rate Acoast to the secondary deceleration rate Ath at the deceleration rate switching position Pk, the driving control device 100 can reduce any discomfort felt by occupants as the host vehicle 1 decelerates, and can improve the ride comfort for the occupants of the host vehicle 1.

While the host vehicle 1 is traveling upstream of the deceleration start position P0, the processor 10 of the driving control device 100 determines whether or not the state of the object can be determined, and when the state of the object cannot be determined, the processor 10 starts to execute driving control according to the vehicle speed profile at the deceleration start position P0. That is, even if the detection device 101 cannot detect the state of the object, the host vehicle 1 will start decelerating at the primary deceleration rate Acoast after passing through the deceleration start position P0. The driving control device 100 can thereby control the driving of the host vehicle 1 in advance so that the host vehicle 1 will be able to stop at the stop position Ps when it has been determined that the state of the object satisfies the stop condition.

The processor 10 of the driving control device 100 determines whether or not the state of the object satisfies a stop condition, and when the state of the object does not satisfy the stop condition, the processor 10 cancels executing driving control according to the vehicle speed profile. The driving control device 100 can thereby control the driving of the host vehicle 1 so that the host vehicle 1 passes through the intersection T without stopping at the stop position Ps when it has been determined that the state of the object does not satisfy a stop condition.

The processor 10 of the driving control device 100 determines whether or not the state of the object satisfies a stop condition at the moment in time when the host vehicle 1 passes through the deceleration rate switching position Pk, and when the state of the object satisfies the stop condition, the processor 10 switches the deceleration rate of the host vehicle 1 from the primary deceleration rate Acoast to the secondary deceleration rate Ath. The driving control device 100 can thereby control the vehicle speed of the host vehicle 1 by assessing whether or not to switch the deceleration rate of the host vehicle 1 from the primary deceleration rate Acoast to the secondary deceleration rate Ath at the moment in time when the host vehicle 1 passes through the deceleration rate switching position Pk.

The processor 10 of the driving control device 100 sets the secondary deceleration rate Ath based on the switching distance Xth between the deceleration rate switching position Pk and the stop position Ps. As shown in Figs. 3 and 4, the secondary deceleration rate Ath is set such that the secondary deceleration rate Ath corresponding to the second switching distance Xth2, which is shorter than the first switching distance Xth1, is higher than the secondary deceleration rate Ath corresponding to the first switching distance Xth1. That is, the secondary deceleration rate Ath is set so as to increase commensurately with a decrease in the switching distance Xth. As a result, the driving control device 100 can appropriately set the secondary deceleration rate Ath in accordance with the stop position Ps without changing the deceleration rate switching position Pk. That is, the secondary deceleration rate Ath is set higher because the switching distance Xth decreases commensurately with an increase in the distance Xc between the object (traffic light B 1) and the stop position Ps, as shown in Fig. 2.

The processor 10 of the driving control device 100 sets the secondary deceleration rate Ath using a predetermined secondary deceleration rate upper limit value Alim as an upper limit. The driving control device 100 can thereby minimize rapid deceleration of the host vehicle 1, reduce any discomfort felt by the occupants of the host vehicle 1 during deceleration, and reduce the effect of the deceleration of the host vehicle 1 on the flow of following traffic.

The processor 10 of the driving control device 100 sets the switching vehicle speed Vth, which is the vehicle speed of the host vehicle 1 at the deceleration rate switching position Pk, based on the switching distance Xth between the deceleration rate switching position Pk and the stop position Ps. As shown in Figs. 3 and 4, the switching vehicle speed Vth is set such that the switching vehicle speed Vth corresponding to the second switching distance Xth2, which is shorter than the first switching distance Xth1, is lower than the switching vehicle speed Vth corresponding to the first switching distance Xth1. That is, the switching vehicle speed Vth is set so as to decrease commensurately with a decrease in the switching distance Xth. The driving control device 100 can thereby appropriately set the switching vehicle speed Vth in accordance with the stop position Ps without changing the deceleration rate switching position Pk. That is, the switching vehicle speed Vth is set lower because the switching distance Xth decreases commensurately with an increase in the distance Xc between the object (traffic light B1) and the stop position Ps, as shown in Fig. 2.

The processor 10 of the driving control device 100 sets the switching vehicle speed Vth using a predetermined vehicle speed upper limit value Vlim as an upper limit. The driving control device 100 can thereby prevent the switching vehicle speed Vth from becoming too high when the switching distance Xth is long. The driving control device 100 can also prevent the switching vehicle speed Vth from becoming equal to or higher than the speed limit (initial vehicle speed Vnow) by setting the vehicle speed upper limit value Vlim lower than the speed limit (initial vehicle speed Vnow). As a result, even when the switching distance Xth is long, the host vehicle 1 can decelerate at the primary deceleration rate Acoast between the deceleration start position P0 and the deceleration rate switching position Pk.

The processor 10 of the driving control device 100 calculates an imaginary deceleration rate Ax for when it is assumed that the host vehicle 1 will decelerate at a constant imaginary deceleration rate Ax between the deceleration start position P0 and the stop position Ps and will stop at the stop position Ps. When the imaginary deceleration rate Ax is higher than the secondary deceleration rate upper limit value Alim, the processor 10 generates a vehicle speed profile again such that the host vehicle 1 will decelerate at the imaginary deceleration rate Ax between the deceleration start position P0 and the stop position Ps. As a result, when the moment in time that the intersection passage determination unit 11 determines the host vehicle 1 will pass through the intersection T is late, or when the moment in time that the secondary deceleration rate assessment unit 14 assesses that the vehicle speed profile will be switched is late, the driving control device 100 can cause the host vehicle 1 to reliably stop at the stop position Ps by causing the host vehicle 1 to rapidly decelerate at the imaginary deceleration rate Ax.

When the imaginary deceleration rate Ax is higher than the maximum deceleration rate Amax and the degree to which the stop condition is satisfied is equal to or less than a predetermined value, the processor 10 of the driving control device 100 cancels executing driving control according to the vehicle speed profile. That is, when the imaginary deceleration rate Ax is higher than the maximum deceleration rate Amax and the degree to which the stop condition is satisfied is equal to or less than a predetermined value, the host vehicle 1 will pass through the stop position Ps at the initial vehicle speed Vnow used for the deceleration start position P0. As a result, when the host vehicle 1 cannot stop at the stop position Ps despite decelerating at the maximum deceleration rate Amax, the driving control device 100 can cause the host vehicle 1 to smoothly pass through the stop position Ps and the intersection T without decelerating, on the condition that the degree to which the stop condition is satisfied is equal to or less than a predetermined value.

The switching determination distance Xa is a distance at which the detection device 101 of the host vehicle 1 can recognize the object (traffic light B1). The driving control device 100 can thereby set the switching determination distance Xa in accordance with the performance of the detection device 101. Specifically, the driving control device 100 can set the switching determination distance Xa so as to increase commensurately with an increase in the performance of the detection device 101. That is, the driving control device 100 can generate a vehicle speed profile corresponding to the performance of the detection device 101. The "distance at which the detection device 101 of the host vehicle 1 can recognize the object" may be the upper limit value of the distance at which the detection device 101 can recognize the object, or a distance shorter than the upper limit value of the distance at which the detection device 101 can recognize the object. The "distance at which the detection device 101 of the host vehicle 1 can recognize the object" may also change based on not only the performance of the detection device 101, but also the travel environment such as the weather.

The processor 10 of the driving control device 100 sets a deceleration start position P0 based on the switching determination distance Xa. As shown in Figs. 3 and 4, the deceleration start position P0 is set such that the deceleration start position P02 corresponding to the second switching determination distance Xa2, which is shorter than the first switching determination distance Xa1, is positioned farther downstream than the deceleration start position P01 corresponding to the first switching determination distance Xa1. The driving control device 100 can thereby set an area (between the deceleration start position P0 and the deceleration rate switching position Pk) in which the host vehicle 1 will decelerate at the primary deceleration rate Acoast in accordance with the switching determination distance Xa.

The object, of which the state is detected by the detection device 101, is a traffic light B 1 installed in the intersection T. In addition, the stop condition is that the traffic light B1 is displaying a stop signal or that the detection device 101 of the host vehicle 1 cannot detect the signal displayed by the traffic light. The driving control device 100 can thereby cause the host vehicle 1 to decelerate in stages at the primary deceleration rate Acoast and the secondary deceleration rate Ath and stop at the stop position Ps while the traffic light B 1 of the intersection T is displaying a stop signal (while the signal color is red) or while the detection device 101 cannot detect the signal displayed by the traffic light due to inclement weather, a malfunction of the traffic light B 1, road shapes such as a curve, obstruction by a large vehicle, etc.

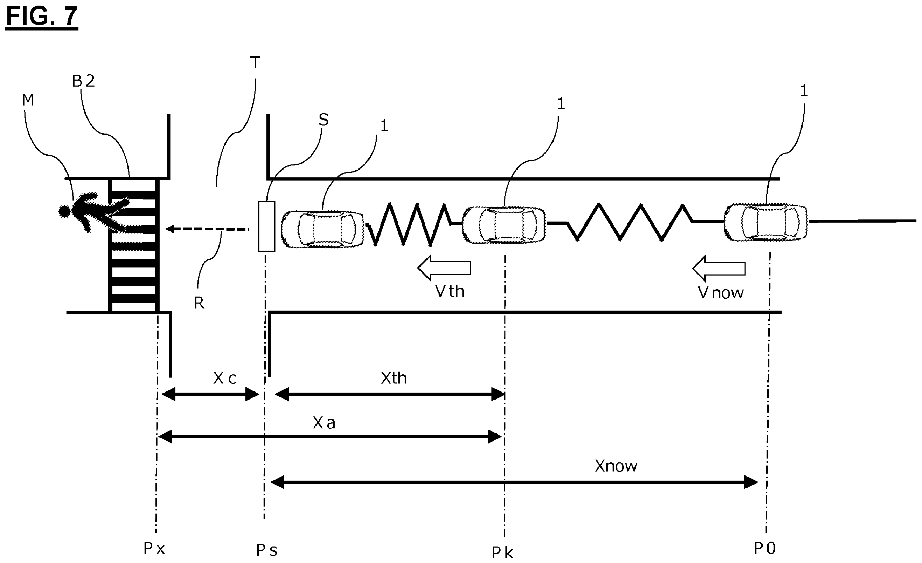

The object, of which the state is detected by the detection device 101, is not limited to a traffic light B1; the object may be a crosswalk B2 that intersects the travel route R of the host vehicle 1, as shown in Fig. 7. When the object is a crosswalk B2, the stop condition is that a moving object M such as a pedestrian exists in the crosswalk B2, or that the detection device 101 of the host vehicle 1 cannot detect the presence or the absence of a moving object M in the crosswalk B2. A pedestrian is not given as a limitation as to the moving object M; the moving object M may be a bicycle, a wheelchair, or the like. As a result, while a moving object M is passing through the crosswalk B2 in the intersection T or while the detection device 101 cannot detect the presence or absence of a moving object M in the crosswalk B2, the driving control device 100 can cause the host vehicle 1 to decelerate in two stages at the primary deceleration rate Acoast and the secondary deceleration rate Ath and stop at the stop position Ps upstream of the intersection T. Reasons why the detection device 101 cannot detect the presence or absence of a moving object M in the crosswalk B2 include, for example, inclement weather, road shapes such as a curve, obstruction by a large vehicle, etc.

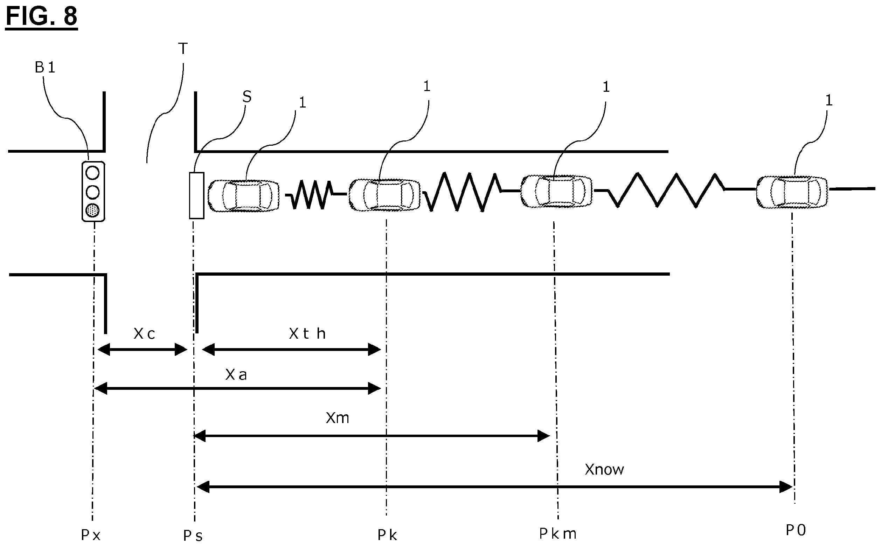

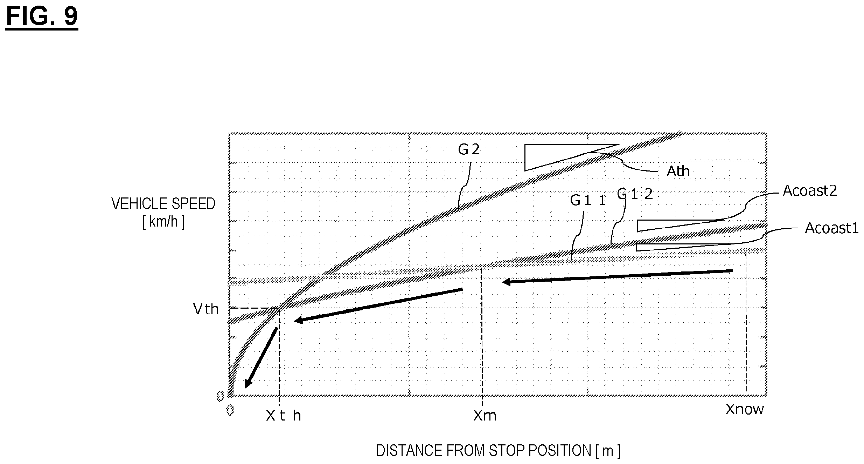

In the examples shown in Figs. 2 and 7, the driving control device 100 causes the host vehicle 1 to decelerate in two stages at the primary deceleration rate Acoast and the secondary deceleration rate Ath when the state of the object satisfies a stop condition, but these examples are not provided by way of limitation; the driving control device 100 may case the host vehicle 1 to decelerate in three stages as shown in Figs. 8 and 9. Specifically, the primary deceleration rate Acoast includes a low primary deceleration rate Acoast1 and a high primary deceleration rate Acoast2 that is higher than the low primary deceleration rate Acoast1. The vehicle speed profile generation unit 13 sets an intermediate deceleration rate switching position Pkm between the deceleration start position P0 and the deceleration rate switching position Pk, as shown in Fig. 8. The distance between the stop position Ps and the intermediate deceleration rate switching position Pkm is an intermediate switching distance Xm. The primary deceleration profile generation unit 131 of the vehicle speed profile generation unit 13 generates a low primary deceleration profile G11 for the host vehicle 1 to decelerate at the low primary deceleration rate Acoast1 and a high primary deceleration profile G12 for the host vehicle 1 to decelerate at the high primary deceleration rate Acoast2, as shown in Fig. 9. When the state of the object satisfies a stop condition, the vehicle speed profile generation unit 13 generates a vehicle speed profile such that the primary deceleration rate Acoast will switch from the low primary deceleration rate Acoast1 to the high primary deceleration rate Acoast2 at the moment in time when the host vehicle 1 passes through the intermediate deceleration rate switching position Pkm.

The driving control device 100 may set a plurality of intermediate deceleration rate switching positions Pkm between the deceleration start position P0 and the deceleration rate switching position Pk and cause the host vehicle 1 to decelerate in four or more stages. In this case, the primary deceleration rate Acoast is constituted of three or more deceleration rates, and the vehicle speed profile generation unit 13 generates a vehicle speed profile such that the primary deceleration rate Acoast will switch from a predetermined deceleration rate to a deceleration rate that is higher than the predetermined deceleration rate at the moments in time when the host vehicle 1 passes through each of the intermediate deceleration rate switching positions Pkm.

Thus, the driving control device 100 may set one or more intermediate deceleration rate switching positions Pkm between the deceleration start position P0 and the deceleration rate switching position Pk, and may generate a vehicle speed profile such that the primary deceleration rate Acoast will switch from a predetermined deceleration rate to a deceleration rate that is higher than the predetermined deceleration rate at the moments in time when the host vehicle 1 passes through each of the intermediate deceleration rate switching positions Pkm. The driving control device 100 can thereby switch the primary deceleration rate Acoast of the host vehicle 1 one or more times between the deceleration start position P0 and the deceleration rate switching position Pk. That is, the driving control device 100 can switch the deceleration rate of the host vehicle 1 in three or more stages before causing the host vehicle 1 to stop at the stop position Ps. The driving control device 100 can thereby cause the host vehicle 1 to decelerate more smoothly, reduce any discomfort felt by the occupants of the host vehicle 1 at deceleration, and improve ride comfort for the occupants.

**Key to Symbols**

100: Driving control device
1: Host vehicle
10: Processor
13: Vehicle speed profile generation unit
111: Deceleration rate switching position setting unit
112: Stop position acquisition unit
114: Intersection determination unit
Acoast: Primary deceleration rate
Ath: Secondary deceleration rate
Ax: Imaginary deceleration rate
Alim: Secondary deceleration rate upper limit value
B1: Object (traffic light)
B2: Object (crosswalk)
M: Moving object
T: Intersection
P0: Deceleration start position
Pk: Deceleration rate switching position
Pkm: Intermediate deceleration rate switching position
Ps: Stop position
Vth: Switching vehicle speed
Vnow: Initial vehicle speed
Vlim: Vehicle speed upper limit value
Xa: Switching determination distance
Xth: Switching distance

**Claims**

1. A driving control method for generating a vehicle speed profile of a host vehicle using a processor, comprising:
   the processor determining whether or not an intersection is exists downstream of the host vehicle, and upon determining the intersection exists:

   setting a deceleration rate switching position that is a predetermined switching determination distance upstream from a predetermined object in the intersection;
   acquiring a stop position upstream of the intersection and downstream of the deceleration rate switching position; and
   generating the vehicle speed profile such that the host vehicle will decelerate at a predetermined primary deceleration rate between a predetermined deceleration start position and the deceleration rate switching position, and decelerate at a secondary deceleration rate that is higher than the primary deceleration rate between the deceleration rate switching position and the stop position so that the host vehicle will stop at the stop position where a state of the object satisfies a predetermined stop condition.

2. The driving control method according to claim 1, wherein

the processor determines whether or not the state of the object can be determined while the host vehicle is traveling upstream of the deceleration start position, and
the processor starts to execute driving control according to the vehicle speed profile at the deceleration start position upon determining the state of the object cannot be determined.

3. The driving control method according to claim 1 or 2, wherein

the processor determines whether or not the state of the object satisfies the stop condition, and
the processor cancels executing driving control according to the vehicle speed profile upon determining the state of the object does not satisfy the stop condition.

4. The driving control method according to any one of claims 1 to 3, wherein

the processor determines whether or not the state of the object satisfies the stop condition at a moment in time when the host vehicle passes through the deceleration rate switching position, and
the processor switches the deceleration rate of the host vehicle from the primary deceleration rate to the secondary deceleration rate upon determining the state of the object satisfies the stop condition.

5. The driving control method according to any one of claims 1 to 4, wherein

the processor sets the secondary deceleration rate based on a switching distance between the deceleration rate switching position and the stop position, and
the secondary deceleration rate corresponding to a second switching distance, which is shorter than a first switching distance, is set higher than the secondary deceleration rate corresponding to the first switching distance.

6. The driving control method according to any one of claims 1 to 5, wherein
the processor sets the secondary deceleration rate using a predetermined secondary deceleration rate upper limit value as an upper limit.

7. The driving control method according to any one of claims 1 to 6, wherein

the processor sets a switching vehicle speed, which is a vehicle speed of the host vehicle 1 at the deceleration rate switching position, based on a switching distance between the deceleration rate switching position and the stop position, and
the switching vehicle speed corresponding to a second switching distance, which is shorter than a first switching distance, is set lower than the switching vehicle speed corresponding to the first switching distance.

8. The driving control method according to claim 7, wherein
the processor sets the switching vehicle speed using a predetermined vehicle speed upper limit value as an upper limit.

9. The driving control method according to claim 6, wherein

the processor calculates an imaginary deceleration rate assuming that the host vehicle will decelerate at a constant imaginary rate between the deceleration start position and the stop position and stop at the stop position, and
the processor generates the vehicle speed profile again such that the host vehicle will decelerate at the imaginary deceleration rate between the deceleration start position and the stop position upon determining the imaginary deceleration rate is higher than the secondary deceleration rate upper limit value.

10. The driving control method according to claim 9, wherein

the processor cancels executing driving control according to the vehicle speed profile where the imaginary deceleration rate is higher than a predetermined maximum deceleration rate and a degree to which the stop condition is satisfied is equal to or less than a predetermined value.

11. The driving control method according to any one of claims 1 to 10, wherein
the switching determination distance is a distance at which a detection device in the host vehicle can recognize the object.

12. The driving control method according to any one of claims 1 to 11, wherein

the processor sets the deceleration start position based on the switching determination distance, and
the deceleration start position corresponding to a second switching determination distance, which is shorter than a first switching determination distance, is positioned downstream from the deceleration start position corresponding to the first switching determination distance.

13. The driving control method according to any one of claims 1 to 12, wherein

the primary deceleration rate includes a plurality of deceleration rates,
the processor sets one or more intermediate deceleration rate switching positions between the deceleration start position and the deceleration rate switching position, and
the processor generates the vehicle speed profile such that the primary deceleration rate will switch from a predetermined deceleration rate to a deceleration rate that is higher than the predetermined deceleration rate at the moments in time when the host vehicle passes through each of the intermediate deceleration rate switching positions.

14. The driving control method according to any one of claims 1 to 13, wherein

the object is a traffic light installed in the intersection, and
the stop condition is that the traffic light is displaying a stop signal, or that the detection device in the host vehicle cannot detect the signal displayed by the traffic light.

15. The driving control method according to any one of claims 1 to 13, wherein

the object is a crosswalk that intersects a travel route of the host vehicle, and
the stop condition is that a moving object existing in the crosswalk, or that the detection device in the host vehicle cannot detect a presence or an absence of a moving object in the crosswalk.

16. A driving control device that generates a vehicle speed profile for a host vehicle, the driving control device comprising:

an intersection determination unit configured to determine whether or not an intersection is exists downstream of the host vehicle;
a deceleration rate switching position setting unit configured to set a deceleration rate switching position that is a predetermined switching determination distance upstream from a predetermined object in the intersection where the intersection exists;
a stop position acquisition unit configured to acquire a stop position that is upstream of the intersection and downstream of the deceleration rate switching position; and
a vehicle speed profile generation unit configured to generate the vehicle speed profile such that the host vehicle will decelerate at a predetermined primary deceleration rate between a predetermined deceleration start position and the deceleration rate switching position, decelerate at a secondary deceleration rate that is higher than the primary deceleration rate between the deceleration rate switching position and the stop position so that the host vehicle will stop at the stop position where a state of the object satisfies a predetermined stop condition.

# FIG. 1

FIG. 2

EP 4 411 691 A1

# FIG. 3

$Xa=Xa1$

VEHICLE SPEED [ km/h ]

G 2

G 1

Ath（Ath1）

Acoast

V now

V th（V th1）

0
(PS)

Xth
(Xth1)

Xnow
(P01)

DISTANCE FROM STOP POSITION [ m ]

EP 4 411 691 A1

16

FIG. 4

Xa=Xa2(<Xa1)

VEHICLE SPEED
[ km/h ]

G 2

Ath（Ath 2）

G 1

V now

V th（V th2）

O
O
(PS)

Xth（Xth2）

Xnow
(P02)

DISTANCE FROM STOP POSITION [ m ]

EP 4 411 691 A1

EP 4 411 691 A1

# FIG. 5

Ax （≦Amax）

Alim

Vnow

VEHICLE SPEED
[ km/h ]

G3

G2

Xnow

DISTANCE FROM STOP POSITION [ m ]

## FIG. 6

```
                    START

              S 1
         IS THERE
        INTERSECTION              NO
          AHEAD?
            YES                S 2
      SET DECELERATION RATE
       SWITCHING POSITION          S 3

      ACQUIRE STOP POSITION

   GENERATE PRIMARY DECELERATION    S 4
      PROFILE AND SECONDARY
       DECELERATION PROFILE

              IS SECONDARY            S 5
    DECELERATION RATE EQUAL TO OR LESS THAN    NO
   SECONDARY DECELERATION RATE UPPER LIMIT            S 6
              VALUE?
               YES           SET SECONDARY DECELERATION RATE
                             TO SECONDARY DECELERATION RATE
                                  UPPER LIMIT VALUE

   S 7          IS SWITCHING
        VEHICLE SPEED EQUAL TO OR LESS     NO
        THAN VEHICLE SPEED UPPER LIMIT            S 8
              VALUE?
               YES           SET SWITCHING VEHICLE
                             SPEED TO VEHICLE SPEED
                               UPPER LIMIT VALUE

              IS IMAGINARY           S 9
        DECELERATION RATE EQUAL TO OR      NO
        LESS THAN SECONDARY DECELERATION            S10
        RATE UPPER LIMIT VALUE?                 IS IMAGINARY
                                        DECELERATION RATE EQUAL TO OR
                                YES     LESS THAN MAXIMUM DECELERATION
                           YES                   RATE?
   S15                                            NO     S12
       NO     STOP CONDITION                    IS DEGREE
             SATISFIED?              TO WHICH STOP CONDITION IS
   S17                              SATISFIED EQUAL TO OR LESS THAN
            YES    S16              PREDETERMINED VALUE?        YES
   PASS THROUGH    SWITCH TO SECONDARY                    PASS THROUGH
   INTERSECTION AT  DECELERATION RATE AT          NO        WITHOUT
   INITIAL VEHICLE  DECELERATION RATE                     DECELERATING
     SPEED        SWITCHING POSITION    S11    S13            S14
                     DECELERATE AT IMAGINARY  DECELERATE AT MAXIMUM
                       DECELERATION RATE      DECELERATION RATE

                    END
```

## FIG. 7

EP 4 411 691 A1

## FIG. 8

## FIG. 9

VEHICLE SPEED
[ km/h ]

G 2

Ath

G 1 1  G 1 2

Acoast2

Acoast1

V th

0

0        X t h              Xm                    Xnow

DISTANCE FROM STOP POSITION [ m ]

**EP 4 411 691 A1**

| INTERNATIONAL SEARCH REPORT | International application No. |
|---|---|
| | **PCT/IB2021/000673** |

**A. CLASSIFICATION OF SUBJECT MATTER**

*G08G 1/16*(2006.01)i
FI: G08G1/16

According to International Patent Classification (IPC) or to both national classification and IPC

**B. FIELDS SEARCHED**

Minimum documentation searched (classification system followed by classification symbols)

G08G 1/00-99/00; B60W10/00-10/30; B60W30/00-60/00; G01C21/00-21/36; G01C23/00-25/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2018/0257615 A1 (DENSO INTERNATIONAL AMERICA, INC.) 13 September 2018 (2018-09-13) paragraphs [0019]-[0057], fig. 1-7 | 1, 3-5, 11, 16 |
| A | paragraphs [0019]-[0057], fig. 1-7 | 2, 6-10, 12-15 |
| X | JP 2021-41851 A (NISSAN MOTOR) 18 March 2021 (2021-03-18) paragraphs [0010]-[0042], [0058]-[0059], fig. 1-5 | 1, 3-4, 6-8, 14, 16 |
| A | JP 2011-221757 A (TOYOTA MOTOR CORP) 04 November 2011 (2011-11-04) paragraphs [0019]-[0068], fig. 1-4 | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 January 2022** | **25 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/IB2021/000673** |

| Patent document cited in search report | | | Publication date (day/month/year) | Patent family member(s) | Publication date (day/month/year) |
| --- | --- | --- | --- | --- | --- |
| US | 2018/0257615 | A1 | 13 September 2018 | (Family: none) | |
| JP | 2021-41851 | A | 18 March 2021 | (Family: none) | |
| JP | 2011-221757 | A | 04 November 2011 | (Family: none) | |

Form PCT/ISA/210 (patent family annex) (January 2015)

**REFERENCES CITED IN THE DESCRIPTION**

**Patent documents cited in the description**

- JP 2018173723 A